# EUROPÄISCHE PATENTSCHRIFT

(11) **EP 3 885 288 B1**
(45) Veröffentlichungstag und Bekanntmachung des Hinweises auf die Patenterteilung: **01.03.2023**
(21) Anmeldenummer: 20165211.2
(22) Anmeldetag: 24.03.2020
(51) Int. Cl.: B65G 17/34, B65G 47/96, B65G 54/02

(54) **SORTIERANLAGE, RASTVORRICHTUNG UND TRANSPORTEINHEIT**
SORTING SYSTEM, LATCHING DEVICE AND TRANSPORT UNIT
INSTALLATION DE TRI, DISPOSITIF D'ENCLIQUETAGE ET UNITÉ DE TRANSPORT

(43) Veröffentlichungstag der Anmeldung: 29.09.2021
(73) Patentinhaber: Siemens Aktiengesellschaft, 80333 München (DE)
(72) Erfinder: Dieges, Andreas, 84061 Ergoldsbach (DE); Pommer, Herbert, 81475 München (DE)

(56) Entgegenhaltungen:
- CN-A- 108 910 392
- JP-A- H0 286 514
- JP-A- 2011 207 599
- US-A1- 2019 375 302
- US-B2- 6 938 750

## Beschreibung

Die Erfindung betrifft eine Sortierangle, insbesondere zum Transport und/oder zum Sortieren von Stückgütern.

In Sortieranlagen, z. B. in Paket- und Gepäcksortieranlagen, werden sogenannte Carrier zum Transport von Stückgut eingesetzt. Die Carrier werden an einer Beladestation mit dem Stückgut beladen und transportieren dieses Stückgut auf einer Transportbahn zu einer Entladestation. Jeder Carrier weist ein Förderband (auch Cross belt oder Querband genannt) auf, welches das Stückgut quer, vorzugsweise rechtwinklig, zur Bewegungsrichtung des Carriers, bewegen kann.

Mittels wenigstens eines Zuführförderbandes oder wenigstens einer Zuführrinne oder wenigstens einer Zuführbahn an einer Beladestation wird dem Carrier meist das Stückgut zugeführt. Das Förderband nimmt das Stückgut auf und platziert es, vorzugsweise mittig, auf dem Carrier.

Mittels wenigstens eines Abführförderbandes oder wenigstens einer Abführrinne oder wenigstens einer Abführbahn an einer Entladestation kann das Stückgut vom Carrier abgeführt werden.

Bisher wird das Förderband auf dem Carrier durch einen Getriebemotor angetrieben.

Der Einsatz eines Getriebemotors bringt jedoch einige Nachteile mit sich. Probleme wie Reibungsverluste, Getriebespiel, Bewegungsungenauigkeiten oder Verschleiß führen zu einem schlechten Wirkungsgrad. Zudem sind Getriebemotoren wartungsintensiv.

### Intern

Ferner offenbart die Patentschrift US 6 938 750 B2 einen Sortierförderer gemäß dem Oberbegriff des Anspruchs 1, mit Querbändern zum Stützen und Entladen von Gegenständen, wobei die Querbänder durch Wechselwirkung zwischen einem Rotor, der sich mit den Querbändern bewegt, und stationären elektrischen Statorteilen angetrieben werden, wobei der Rotor getrennt vom Querband angeordnet ist und mit einer Antriebsrolle mit einem Getriebe verbunden ist.

Eine der Erfindung zugrundeliegende Aufgabe kann folglich darin gesehen werden, einen Antrieb des Carrier-Förderbandes, also einen Antrieb des Cross belts, zu verbessern.

Die Lösung der Aufgabe gelingt durch Anspruch 1, d. h. eine Sortieranlage, insbesondere zum Transport und/oder zum Sortieren von Stückgütern, aufweisend: wenigstens eine Transportbahn, aufweisend wenigstens einen lokalen Stator, sowie wenigstens eine Transporteinheit, aufweisend wenigstens ein Förderelement, insbesondere zur Beladung und/oder Entladung eines Stückguts, und wenigstens einen Förderrotor mit wenigstens einem Permanentmagneten, vorzugsweise einer Mehrzahl an Permanentmagneten, zum Antrieb des Förderelements, wobei die Transporteinheit zur Bewegung auf der Transportbahn in einer Bewegungsrichtung ausgebildet ist, wobei der Förderrotor dazu ausgebildet ist, um eine Rotationsachse zu rotieren, wenn der Förderrotor in elektromagnetische Wechselwirkung mit dem lokalen Stator gelangt, wobei die Transportbahn wenigstens eine Rastvorrichtung aufweist, die derart ausgebildet ist, dass auf den Förderrotor ein Rastmoment wirkt, wenn der Förderrotor in elektromagnetische Wechselwirkung mit der Rastvorrichtung gelangt.

Die Transporteinheit ist vorzugsweise ein Carrier. Das Förderelement ist vorzugsweise ein Cross belt. Es sind jedoch auch andere Ausführungsformen des Förderelements denkbar. Z. B. kann das Förderelement als Kippelement ausgeführt sein, bei welchem durch eine Kippbewegung ein Stückgut be- und/oder entladen wird.

Ein Carrier kann überdies auch eine Mehrzahl an Förderelementen aufweisen.

Beispielsweise kann ein Carrier zwei oder mehr Cross belts, z. B. mit unterschiedlichen Bewegungsrichtungen, aufweisen. Ein Carrier kann jedoch auch wenigstens einen Cross belt und wenigstens ein Kippelement aufweisen.

Der lokale Stator ist vorteilhaft an einer Beladestation und/oder an einer Entladestation angeordnet. Es ist jedoch auch eine Anordnung an anderen Abschnitten der Transportbahn denkbar. Der lokale Stator wird vorteilhaft derart bestromt, dass sich eine Drehrichtung des Förderrotors und somit des Förderelements ergibt, die eine Aufnahme bzw. Abgabe des Stückguts ermöglicht.

Der lokale Stator kann ein einzelner Stator oder eine Statorengruppierung, aufweisend eine Mehrzahl an Statoren, sein. Bei einer Statorengruppierung werden die Statoren vorteilhaft in Bewegungsrichtung der Transporteinheit nacheinander bestromt.

Der lokale Stator ist vorzugsweise halboffen ausgeführt, insbesondere als Segment-Stator.

Der Förderrotor und der lokale Stator bilden den Motor für einen Direktantrieb des Förderelements. Die Transporteinheit weist vorteilhaft keinen dem Förderrotor zugehörigen Stator auf.

Der Förderrotor und der lokale Stator bilden vorteilhaft einen Synchronmotor.

Weitere Vorteile der Erfindung sind: Die einzelnen Carrier - und somit auch das Gesamtsystem - werden einfacher, leichter und billiger, da sich eine Vielzahl von Carriern nur wenige Statoren teilen.

Die Transporteinheit ist, wie oben beschrieben, zur Bewegung auf der Transportbahn in einer Bewegungsrichtung ausgebildet. Dies gelingt vorteilhaft mit einem Linearantrieb. Jedoch sind auch andere Antriebsarten möglich.

Ein Linearantrieb ist ein Antriebssystem, das zu einer translatorischen Bewegung führt. Ein Linearantrieb ermöglicht eine Bewegung von Maschinen bzw. Maschinenelementen und/oder Anlagen bzw. Anlagenteilen in gerader Linie oder einem anderen vorgegebenen Verlauf. Ein bevorzugter Linearantrieb zur Bewegung der Transporteinheit auf der Transportbahn ist ein Linearmotor.

Ein Linearmotor ist eine elektrische Antriebsmaschine. Anders als eine rotierende Maschine versetzt ein Linearmotor die von ihm getriebenen Objekte nicht in eine drehende Bewegung, sondern schiebt sie auf geradliniger oder gekurvter Bahn. Der Linearmotor vollzieht eine Translationsbewegung.

Ein Rastmoment wird durch eine elektromagnetische Wechselwirkung des Permanentmagnete aufweisenden Förderrotors mit der weichmagnetisches Material aufweisenden Rastvorrichtung erlangt. Der Rotor nimmt dadurch vorteilhaft eine Stellung ein, in welcher sich Permanentmagnete und Zähne der Rastvorrichtung gegenüberliegen. Es gilt hierbei, je mehr Zähne, desto höher ist das Rastmoment.

Das Haltemoment ist ein zusätzliches Moment, welches durch die Bestückung der Rastvorrichtung mit Permanentmagneten und/oder mit einer Bestromung des vorteilhaft in den Nuten positionierten Wicklungssystems erreicht wird.

Die beschriebene Ausführung bietet den Vorteil, dass das Förderelement, insbesondere der Förderrotor, gehalten bzw. fixiert werden kann, insbesondere wenn die Transporteinheit Kurven, Steigungen und/oder andere Neigungen passiert. In Kurven, Steigungen und/oder Neigungen wirkt eine Fliehkraft und/oder Schwerkraft auf das Förderelement und/oder auf das transportierte Stückgut. Sind diese Kräfte größer als mechanische Reibmomente des Förderelements und/oder des Förderrotors (vorzugsweise einschließlich eventueller Aufhängungen, Getrieben etc.) besteht die Gefahr, dass das Stückgut von der Transporteinheit fällt. Die beschriebene Ausführung verhindert dies jedoch.

In einer vorteilhaften Ausführungsform ist die Rastvorrichtung an wenigstens einem Abschnitt der Transportbahn angeordnet, der derart ausgebildet ist, dass ohne elektromagnetische Wechselwirkung mit einem Stator eine Fliehkraft und/oder eine Schwerkraft eine Rotation des Förderrotors bewirken würde.

Eine derartige Rotation ist an den besagten Abschnitten der Transportbahn meist nicht gewollt, da dort, wie beschrieben, das Stückgut von der Transporteinheit rutschen bzw. fallen kann.

In einer vorteilhaften Ausführungsform weist die Rastvorrichtung weichmagnetisches Material auf.

Besonders gut eignen sich ferromagnetische Materialien. Vorteilhaft weist die Rastvorrichtung Eisen und/oder Stahl auf. Möglich ist überdies, dass die Rastvorrichtung Nickel und/oder Kobald aufweist.

In einer vorteilhaften Ausführungsform ist die Rastvorrichtung durch wenigstens einen Luftspalt vom Förderrotor beabstandet.

Dies bedeutet in anderen Worten: Wenn die Transporteinheit auf ihrem Weg auf der Transportbahn eine Rastvorrichtung passiert, sind der Förderrotor und die Rastvorrichtung lediglich durch den Luftspalt beabstandet. Befindet sich die Transporteinheit auf einem anderen Abschnitt der Transportbahn, beispielsweise einer Geraden ohne Rastvorrichtung, ist die Beabstandung deutlich größer.

In einer vorteilhaften Ausführungsform weist die Rastvorrichtung wenigstens einen Zahn auf, wobei der Zahn in Richtung des Luftspalts weist.

Vorteilhaft ist der Zahn derart ausgebildet, dass er in Bewegungsrichtung der Transporteinheit verläuft. Vorteilhaft ist der Zahn, z. B. in Kurven, bogenförmig oder tangential ausgebildet.

In einer vorteilhaften Ausführungsform weist die Rastvorrichtung eine Mehrzahl von Zähnen, vorzugsweise zwischen 10 und 15, auf, wobei die Rastvorrichtung zwischen zwei Zähnen eine Nut aufweist.

Die Rastvorrichtung weist vorzugsweise derart viele Zähne auf, dass ein benötigtes Rastmoment erreicht wird und ein verfügbarer Bauraum ausgenutzt wird.

Eine Maximalanzahl sind 2p Zähne, wobei 2p die Rotorpolzahl ist.

In einer vorteilhaften Ausführungsform sind die Zähne über ein magnetisch leitfähiges Joch verbunden.

Das Joch weist vorteilhaft ferromagnetisches Material auf, vorzugsweise Eisen und/oder Stahl.

Alternativ dient das Joch nur einer mechanischen Befestigung und weist daher magnetisch nicht- bzw. kaum-leitfähiges Material auf. Dies wird in der Figurenbeschreibung näher erläutert.

In einer vorteilhaften Ausführungsform weist die Rastvorrichtung eine Mehrzahl von Materiallagen auf.

Die Rastvorrichtung ist vorzugsweise ein Materiallagen aufweisendes Gefüge, wobei die Materiallagen miteinander verschraubt, vernietet, verschweißt, stanzpaketiert, verklebt und/oder verbacken sind. Die Materiallagen sind vorteilhaft Bleche. Dennoch sind auch andersartige Materiallagen denkbar. Die Rastvorrichtung ist vorteilhaft ein Blechpaket.

Die Rastvorrichtung kann alternativ auch massiv ausgeführt sein, beispielsweise in Form eines Eisen und/oder Stahl aufweisenden Massivteils. Es eignen sich jedoch auch andere, insbesondere ferromagnetische, Materialien.

Die Rastvorrichtung kann überdies auch aus einem gesinterten Material bestehen bzw. zumindest gesintertes Material aufweisen. Vorzugsweise wird hierbei ein Material verwendet, das gut magnetisch leitend, jedoch nicht oder kaum elektrisch leitend ist.

In einer vorteilhaften Ausführungsform ist ein Innendurchmesser der Rastvorrichtung größer als ein Außendurchmesser des Förderrotors.

Dies ist vorteilhaft, da dadurch die Transporteinheit samt Förderrotor leicht über die Rastvorrichtung fahren kann.

Es ist jedoch auch eine exzentrische Anordnung möglich.

In einer alternativen Ausführungsform entspricht ein Innendurchmesser der Rastvorrichtung dem Außendurchmesser des Förderrotors.

Der Luftspalt zwischen Rastvorrichtung und Förderrotor ist hierbei vorteilhaft derart dimensioniert, dass sich Förderrotor und Rastvorrichtung beim Passieren der Transporteinheit nicht berühren.

In einer vorteilhaften Ausführungsform ist ein Innendurchmesser der Rastvorrichtung kleiner als ein Außendurchmesser des Förderrotors.

Der Luftspalt zwischen Rastvorrichtung und Förderrotor ist hierbei vorteilhaft derart dimensioniert, dass sich Förderrotor und Rastvorrichtung beim Passieren der Transporteinheit nicht berühren.

In einer vorteilhaften Ausführungsform ist die Rastvorrichtung als Segment ausgebildet, wobei das Segment einen Winkel α abbildet, wobei der Winkel α vorzugsweise zwischen 90° und 150°, insbesondere zwischen 110° und 130°, liegt.

Insbesondere ein 110° bis 130°-Segment ist aufgrund konstruktiver Eigenschaften von Vorteil, da auf diese Weise eine ausreichende Anzahl von Zähnen möglich ist und somit ein gutes Rastmoment erreicht wird. Ferner kann die Transporteinheit auf einfache Weise über die Rastvorrichtung fahren.

Es sind jedoch auch andere Winkel möglich.

In einer vorteilhaften Ausführungsform entspricht eine Zahnteilung der Rastvorrichtung wenigstens im Wesentlichen einer Polteilung der Permanentmagnete des Förderrotors.

Dies ist vorteilhaft, da dadurch ein Permanentmagnet einem Zahn gegenübersteht und so ein gutes Rastmoment gegeben ist.

In einer alternativen Ausführungsform entspricht eine Zahnteilung der Rastvorrichtung wenigstens im Wesentlichen einem Vielfachen oder einem Teiler der Polteilung der Permanentmagnete des Förderrotors.

Dies bedeutet in anderen Worten: Ein Permanentmagnet steht zwei oder drei oder vier oder mehr Zähnen gegenüber bzw. ein Zahn steht zwei oder drei oder vier oder mehr Permanentmagneten gegenüber.

In einer vorteilhaften Ausführungsform weist die Rastvorrichtung ein Wicklungssystem zur Bildung und/oder Erhöhung eines Haltemoments auf, wobei das Wicklungssystem vorzugsweise in den Nuten positioniert ist.

Diese Ausführungsform bietet den Vorteil, dass auch sehr schwere Stückgüter sicher durch Kurven transportiert werden können. Ferner können dadurch größere Fliehkräfte überwunden werden, die z. B. von einer schnelleren Bewegung, also einer schnellen Fahrt, der Transporteinheit auf der Transportbahn herrühren.

Die Positionierung des Wicklungssystems in den Nuten ist besonders platzsparend.

Es ist jedoch auch denkbar, dass das Wicklungssystem zwischen den Zähnen auf dem Joch ausgeführt ist. In anderen Worten: Das Wicklungssystem ist zwischen den Zähnen um das Joch gewickelt.

In einer vorteilhaften Ausführungsform weist die Rastvorrichtung Permanentmagnete zur Bildung und/oder Erhöhung des Haltemoments auf.

Auch diese Ausführungsform ermöglicht einen sicheren Transport von schweren Stückgütern.

In einer vorteilhaften Ausführungsform sind die Permanentmagnete in den Nuten angeordnet und/oder auf einer in Richtung des Luftspalts weisenden Seite des Zahns.

Die Positionierung der Permanentmagnete in den Nuten ist besonders platzsparend.

Es ist jedoch auch eine Anordnung der Permanentmagnete in und/oder auf dem Joch denkbar.

Es ist auch eine Kombination von Wicklungssystem und Permanentmagneten möglich.

In einer vorteilhaften Ausführungsform weist die Sortieranlage eine Mehrzahl an Transporteinheiten auf, wobei die Mehrzahl an Transporteinheiten als, vorzugsweise gelenkig verbundene, Transportkette ausgebildet ist.

Vorteilhaft ist hierbei, dass die Transportkette eine hohe Laufruhe aufweist.

Die gelenkige Verbindung ermöglicht eine gute Bewegung der Transporteinheiten in Kurven.

Die Transporteinheiten können jedoch auch eigenständig, also nicht zu einer Transportkette verbunden, sein.

Die Rastvorrichtung kann wenigstens einen Zahn aufweisen.

Die Rastvorrichtung weist in einer vorteilhaften Ausführung eine Mehrzahl von Zähnen, vorzugsweise zwischen 10 und 15, auf, wobei die Rastvorrichtung zwischen zwei Zähnen eine Nut aufweist.

Die Zähne sind in einer vorteilhaften Ausführung über ein magnetisch leitfähiges Joch verbunden.

Die Rastvorrichtung weist in einer vorteilhaften Ausführung eine Mehrzahl von Materiallagen auf. Die Materiallagen sind vorteilhaft Bleche.

Die Rastvorrichtung ist vorzugsweise halboffen ausgeführt, insbesondere als Segment.

Die Rastvorrichtung ist in einer vorteilhaften Ausführung als Segment ausgebildet, wobei das Segment einen Winkel α abbildet, wobei der Winkel α vorzugsweise zwischen 90° und 150°, insbesondere zwischen 110° und 130°, liegt.

Die Rastvorrichtung weist in einer vorteilhaften Ausführung ein Wicklungssystem zur Bildung und/oder Erhöhung eines Haltemoments auf, wobei das Wicklungssystem in den Nuten positioniert ist.

Vorzugsweise ist jeder Zahn von einer Spule umgeben.

Vorzugsweise ist zwischen Zahn und Spule Isolationsmaterial angeordnet.

Die Rastvorrichtung weist in einer vorteilhaften Ausführung Permanentmagnete zur Bildung und/oder Erhöhung des Haltemoments auf.

Die Permanentmagnete sind vorzugsweise in den Nuten angeordnet und/oder auf einer in Richtung des Luftspalts weisenden Seite des Zahns angeordnet.

Es ist überdies eine Kombination von Wicklungssystem und Permanentmagneten denkbar.

Die Transporteinheit weist einen Förderrotor auf, wobei die Transporteinheit keinen mit dem Förderrotor elektromagnetisch wechselwirkenden Stator aufweisen kann.

Dies bedeutet in anderen Worten: Die Transporteinheit weist einen Förderrotor auf, aber keinen dem Förderrotor zugehörigen Stator, mit welchem eine elektromagnetische Wechselwirkung erfolgt.

Der Förderrotor ist vorteilhaft permanentmagneterregt. Jedoch ist auch eine andere Erregung denkbar.

Die Erfindung bietet den Vorteil, dass durch die Trennung von Stator und Förderrotor keine aufwändige Energieübertragung auf einen bewegten Carrier nötig ist.

Die beschriebene Rastvorrichtung ermöglicht den Verzicht auf Aktuatoren auf dem Carrier, die mit elektrischer und/oder mechanischer Energie versorgt werden müssen, wie z. B. eine elektrisch oder mechanisch betätigte Bremse für das Förderband.

Eine Nutzung der magnetischen Rastmomente ermöglicht ein Bremsen bzw. Halten des Förderbandes, ohne dass dem Carrier hierzu elektrische Energie zugeführt wird. Zudem ist auch kein verschleißbehafteter mechanischer Kontakt zum Carrier nötig.

Die beschriebene Rastvorrichtung ist zudem kostengünstig, da nicht jeder Carrier eine eigene Bremsvorrichtung benötigt.

Im Folgenden wird die Erfindung anhand der in den Figuren gezeigten Ausführungsbeispiele näher beschrieben und erläutert. Es zeigen:
- FIG 1: eine Sortieranlage mit einer Beladestation und einer Entladestation,
- FIG 2: einen Abschnitt der Transportbahn, welcher an die Entladestation grenzt,
- FIG 3: den Förderrotor beim Passieren des lokalen Stators,
- FIG 4: drei Transporteinheiten, welche vorzugsweise gelenkig aneinander gekettet sind,
- FIG 5: eine Ausführung der Rastvorrichtung,
- FIG 6: einen Ausschnitt aus FIG 5,

- FIG 7: eine weitere Ausführung der Rastvorrichtung,
- FIG 8: eine weitere Ausführung der Rastvorrichtung,
- FIG 9: eine weitere Ausführung der Rastvorrichtung.

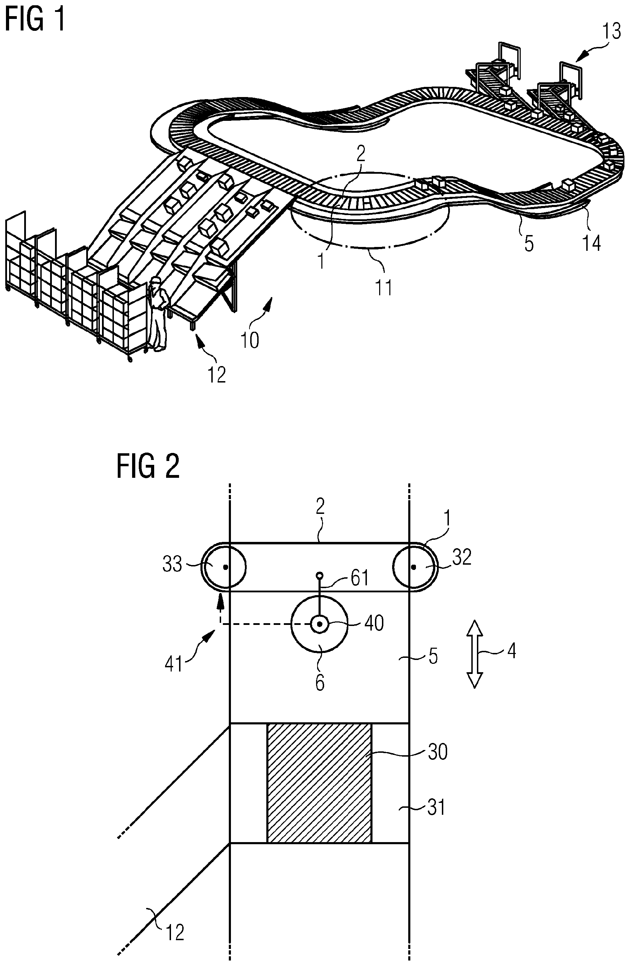

FIG 1 zeigt eine Sortieranlage 10 mit einer Beladestation 13 und einer Entladestation 12.

Die Figur zeigt ferner eine Mehrzahl an Transporteinheiten 1, sogenannte Carrier. Die Mehrzahl an Transporteinheiten 1 sind zu einer Transportkette verbunden.

Die Transportkette weist eine Mehrzahl aus einzelnen gelenkig zu einer geschlossenen Kette verbundenen Transporteinheiten 1 auf.

Die Transporteinheiten 1 werden entlang einer Transportbahn 5 mit Geschwindigkeiten von 1 m/s bis zu 3,5 m/s bewegt. Eine bevorzugte Geschwindigkeit liegt bei 2,5 m/s.

Die Figur zeigt, dass mehrere Transporteinheiten 1 mit jeweils einem Stückgut 14, in Form eines Pakets, beladen sind.

Zur Be- oder Entladung des Stückguts 14 weist die Transporteinheit 1 ein Förderelement 2 in Form eines Förderbandes bzw. Cross belts auf.

Eine Transporteinheit 1 wird, wie in der Figur gezeigt, an der Beladestation 13 mit einem Stückgut 14 beladen. In anderen Worten: Die Transporteinheit 1 nimmt an der Beladestation 13 ein Stückgut 14 auf.

Die Transporteinheit 1 transportiert das Stückgut 14 entlang der Transportbahn 5 zu der Entladestation 12.

Die Transportbahn 5 weist in der Figur wenigstens eine Kurve 11 auf. Bei Passieren dieser Kurve wirkt auf die Transporteinheit 1 sowie auf das Stückgut 14 wenigstens eine Fliehkraft.

Das Förderelement 2 weist einen Förderrotor zum Antrieb des Förderelements 2 auf (nicht in der Figur gezeigt). Dies ist vorteilhaft, da dadurch die Transporteinheit 1 das Stückgut 14 gut aufnehmen und platzieren, vorzugsweise mittig platzieren, kann.

FIG 2 zeigt einen Abschnitt der Transportbahn 5, welcher an die Entladestation 12 grenzt.

Die Transporteinheit 1 fährt auf der Transportbahn 5. Dies gelingt mittels eines Linearantriebs besonders gut. Es sind jedoch auch andere Antriebe zur Bewegung der Transporteinheit 1 auf der Transportbahn 5 möglich.

In einem Entladebereich 31 an der Entladestation 12 ist ein Stator 30 angeordnet. Die Figur zeigt, dass die Transporteinheit 1 ein Förderelement 2 sowie eine Antriebsrolle 33 und eine Umlenkrolle 32 aufweist. Die Antriebsrolle 33 wird durch einen Förderrotor 6 angetrieben, welcher mittels einer Aufhängung 61 an der Transporteinheit 1 befestigt ist. Eine Rotorwelle ist vorzugsweise zur Bewegung der Antriebsrolle 33 mit der Antriebsrolle 33 verbunden.

Die Figur zeigt eine Welle 40 sowie eine Kraftübertragungsvorrichtung 41, die einer Kraftübertragung von der Welle 40 zur Rolle 33 dient.

Als Kraftübertragungsvorrichtung 41 ist z. B. ein Riemen, ein Zahnriemen, eine Kette, ein Zahnrad oder eine Kardanwelle geeignet. Auch andere Kraftübertragungsvorrichtungen sind denkbar.

Die Transporteinheit 1 bewegt sich in einer Bewegungsrichtung 4 auf der Transportbahn 5. Beim Passieren des Entladebereichs 31 gelangen der Förderrotor 6 und ein im Entladebereich angeordneter lokaler Stator 30 in elektromagnetische Wechselwirkung. Dies führt dazu, dass der Förderrotor 6 rotiert und das Stückgut 14 in die Entladebahn der Entladestation 12 abgegeben werden kann. Der Förderrotor 6 treibt hierbei die Rolle 33 an. Die Rolle 32 dient nur als Umlenkrolle. Es ist jedoch auch denkbar, dass beide Rollen durch den Förderrotor 6 angetrieben werden.

Der lokale Stator 30 kann ein einzelner Stator sein. Es ist jedoch auch möglich, dass mehrere Statoren hintereinander angeordnet sind. Vorzugsweise ist eine axiale Länge des lokalen Stators 30 bzw. eine axiale Gesamtlänge der Mehrzahl an Statoren größer als eine axiale Länge des Förderrotors 6.

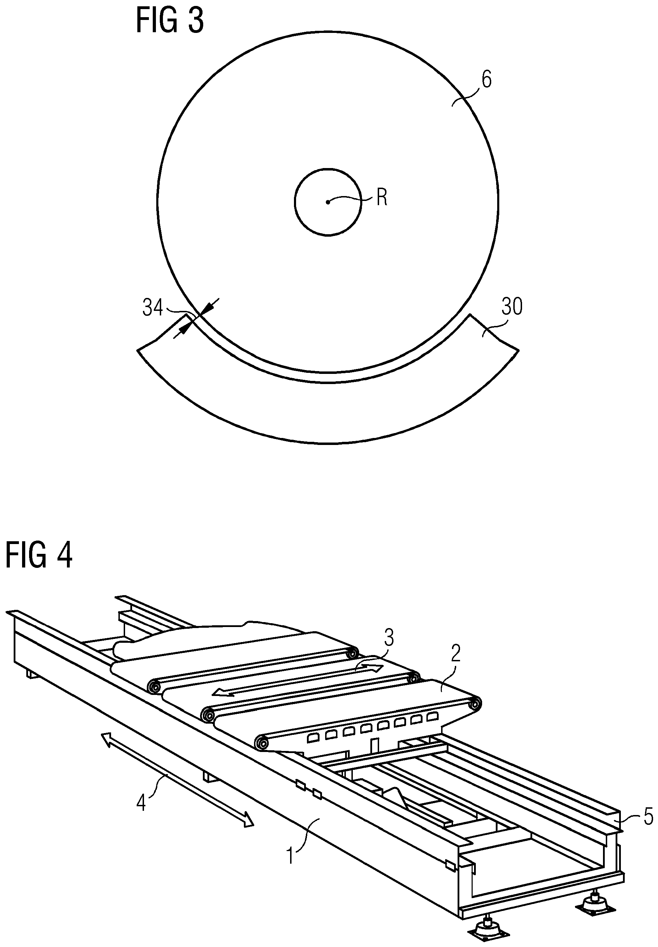

FIG 3 zeigt den Förderrotor 6 beim Passieren des lokalen Stators 30.

Der Förderrotor 6 und Stator 30 sind durch einen Luftspalt 34 beabstandet. Der Förderrotor 6 rotiert um eine Rotationsachse R.

Der Förderrotor 6 weist vorzugsweise Permanentmagnete auf. Der lokale Stator 30 ist vorzugsweise elektrisch erregt. Vorzugsweise sind auf einer Transportbahn 1 mehrere derartige lokale Statoren 30 angeordnet. Die lokalen Statoren 30 sind derart ausgeführt, dass der Förderrotor 6 beim Passieren einer Beladestation derart rotiert, dass ein Stückgut von einem Zuführförderband oder einer Zuführbahn von einem Rand der Transporteinheit 1 zu einer Mitte der Transporteinheit 1 bewegt wird. Der lokale Stator 30, der vorteilhaft in einem Entladebereich 31 angeordnet ist, ist vorzugsweise derart ausgeführt bzw. wird vorzugsweise derart bestromt, dass der Förderrotor 6 bei elektromagnetischer Wechselwirkung derart rotiert, dass das Stückgut 14 von der Mitte der Transporteinheit 1 zu einem Rand der Transporteinheit 1 befördert wird, damit eine Abführung in eine Abführbahn oder auf ein Abführförderband gelingt.

Die gezeigte Förderrotor-Stator-Anordnung ist vorzugsweise Teil eines Direktantriebs. Somit fällt eine aufwändige Energieübertragung, verglichen mit bisher eingesetzten Getriebemotoren, weg.

FIG 4 zeigt drei Transporteinheiten 1, welche vorzugsweise gelenkig aneinander gekettet sind.

Die Transporteinheiten 1 können jedoch auch eigenständig sein.

Die Transporteinheiten 1 bewegen sich in der Bewegungsrichtung 4 entlang der Transportbahn 5 bzw. auf der Transportbahn 5. Diese Bewegung gelingt vorteilhaft mit einem Linearmotor, jedoch sind auch andere Antriebsarten denkbar.

Die Figur zeigt ferner das Förderelement 2, auch Cross belt genannt, sowie die Bewegungsrichtung 3 des Förderelements 2.

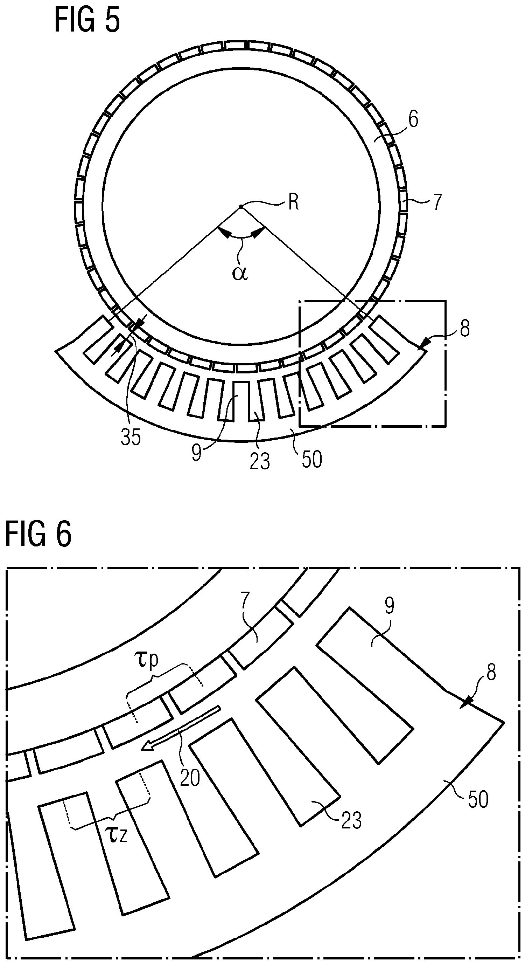

FIG 5 zeigt eine Ausführung der Rastvorrichtung 8.

Die Rastvorrichtung 8 weist wenigstens einen Zahn, vorzugsweise eine Mehrzahl an Zähnen 9 auf. Zwischen zwei Zähnen 9 ist eine Nut 23 angeordnet. Die Zähne sind in der Figur über ein Joch 50 verbunden. Das Joch 50 weist vorteilhaft magnetisch leitfähiges Material auf.

Die Figur zeigt den Förderrotor 6, welcher mit Permanentmagneten 7 bestückt ist. Die Rastvorrichtung 8 ist in der Figur als Segment ausgebildet. Dieses Segment bildet einen Winkel α ab, wobei ein Winkelscheitel des Winkels α im Mittelpunkt des Förderrotors 6 angeordnet ist, also in jenem Punkt, in welchem stirnseitig betrachtet die Rotationsachse R liegt.

Die Rastvorrichtung 8 weist vorzugsweise eine Mehrzahl von Materiallagen auf, insbesondere in Form von Blechen. Die Rastvorrichtung 8 ist somit vorzugsweise ein Blechpaket. Die Rastvorrichtung 8 weist vorteilhaft weichmagnetisches Material auf. Die Rastvorrichtung 8 ist durch einen Luftspalt 35 von dem Rotor 6 beabstandet.

Die Rastvorrichtung 8 weist vorzugsweise eine Mehrzahl von Zähnen 9 auf, insbesondere zwischen 10 und 15 Zähne. Maximal weist die Rastvorrichtung 8 eine Anzahl von Zähnen 9 auf, welche einer Rotorpolzahl entspricht. Bei Aufweisen der Maximalzahl ist die Rastvorrichtung 8 jedoch nicht mehr als Segment ausgeführt, sondern als Vollkreis.

FIG 6 zeigt einen Ausschnitt aus FIG 5.

FIG 6 zeigt eine Polteilung τₚ des Rotors 6 sowie eine Zahnteilung τ_{z} der Rastvorrichtung 8. Es gilt τₚ = τ_{z}. Dies ist vorteilhaft, da der Rotor bei nicht vorhandener elektrischer Erregung sich in eine Stellung begibt, in welcher ein Permanentmagnet 7 einem Zahn 9 gegenübersteht, und somit rastet.

Die Figur zeigt das Rastmoment 20, das in der gezeigten Richtung wirkt. Aufgrund elektromagnetischer Wechselwirkungen von Permanentmagnet 7 und weichmagnetischem Material in der Rastvorrichtung 8 wird eine Stellung angestrebt, in welcher sich Zahn und Permanentmagnet gegenüberstehen.

Die in den Figuren 5 und 6 gezeigte Rastvorrichtung 8 wird vorzugsweise auf Abschnitten der Transportbahn 5 angeordnet, die derart ausgebildet sind, dass eine Fliehkraft und/oder eine Schwerkraft eine ungewollte Rotation des Förderrotors bewirken. Es liegt hierbei also keine elektromagnetische Wechselwirkung mit einem Stator vor, der den Rotor rotieren lässt, sondern eine Fliehkraft und/oder eine Schwerkraft führen zu einer ungewollten Bewegung des Förderelements (hier: Förderbandes) bzw. des Förderrotors 6. Dies trifft beispielsweise auf Kurven oder Neigungen des Transportbandes zu. Solange die Drehmomente, die sich aus der Fliehkraft und/oder der Schwerkraft ergeben, kleiner sind als das Rastmoment, wird eine Bewegung des Förderrotors 6 auf maximal 1/4 der Polteilung in beide Drehrichtungen begrenzt. Eine Bewegung des Förderrotors 6 um maximal 1/2 Polteilung ist möglich, sobald die magnetischen Kräfte zwischen Rotor und Rastvorrichtung 8 zu wirken beginnen.

Eine Anzahl der Zähne 9 in der Rastvorrichtung 8 steht in unmittelbarem Zusammenhang mit einer Höhe des Rastmoments, denn je mehr Zähne 9 in der Rastvorrichtung 8 vorhanden sind, desto höher ist das Rastmoment.

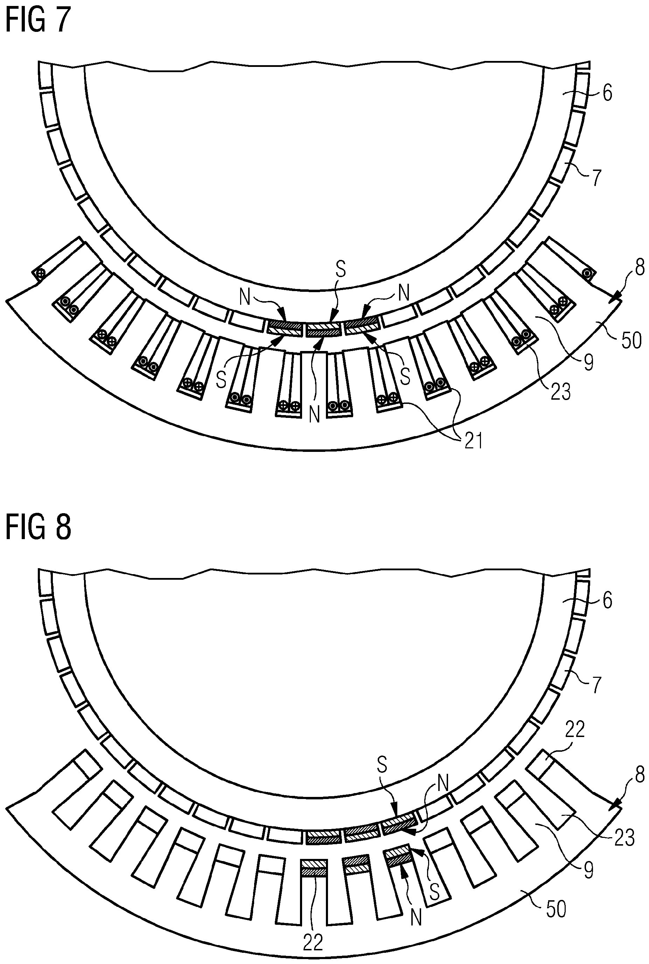

FIG 7 zeigt eine weitere Ausführung der Rastvorrichtung 8.

FIG 7 zeigt denn Förderrotor 6, welcher mit Permanentmagneten 7 bestückt ist. Die Figur zeigt ferner beispielhaft an drei Permanentmagneten 7 den Nordpol und Südpol. Die Figur zeigt die Rastvorrichtung 8 mit Zähnen 9. Zwischen zwei Zähnen 9 ist eine Nut 23 ausgeführt. In den Nuten 23 ist ein Wicklungssystem 21 positioniert.

Das Wicklungssystem 21 dient einer Erhöhung eines Haltemoments. Wenn ein Rastmoment nicht ausreicht, um das Förderelement 2 bzw. Cross belt sicher an einer ungewollten Bewegung zu hindern, kann das Haltemoment durch ein zusätzliches Wicklungssystem 21 erhöht werden. Hierzu wird, wie in der Figur gezeigt, die Rastvorrichtung 8 mit zusätzlichen Wicklungssystemen 21 bestückt. Bei Bestromung kann das Haltemoment über das Rastmoment hinaus erhöht werden.

Wenn die Polarität einer Gleichspannung abhängig von einer Polposition des zu haltenden bzw. des zu bremsenden Förderrotors 6 eingestellt wird, bewegt sich der Förderrotor 6 maximal um eine 1/2 Polteilung, sobald eine Kraftwirkung zwischen Förderrotor 6 und Rastvorrichtung beginnt. Hierzu ist jedoch ein zusätzlicher Sensor (nicht dargestellt) notwendig. Ist die Polarität der Gleichspannung fest, ist eine Bewegung um eine Polteilung möglich. Sobald der Förderrotor 6 magnetisch gehalten wird, ist eine maximale Auslenkung aus einer Ruhelage 1/4 der Polteilung in beide Richtungen möglich.

FIG 8 zeigt eine weitere Ausführung der Rastvorrichtung 8.

Die Rastvorrichtung 8 weist Permanentmagnete zur Erhöhung des Haltemoments auf. Die Permanentmagnete sind, wie in der Figur gezeigt, auf einer in Richtung des Luftspalts weisenden Seite des Zahns 9 angeordnet. Die Permanentmagnete sind vorteilhaft so angeordnet, dass eine Polabfolge an der Rastvorrichtung 8 der Polabfolge des Förderrotors 6 entspricht. Der Einsatz von Permanentmagneten führt dazu, dass sich der Förderrotor 6 um maximal eine Polteilung bewegt, wenn die Kraftwirkung einsetzt. Sobald der Förderrotor 6 magnetisch gehalten wird, ist die maximale Auslenkung aus der Ruhelage 1/4 der Polteilung in beide Richtungen.

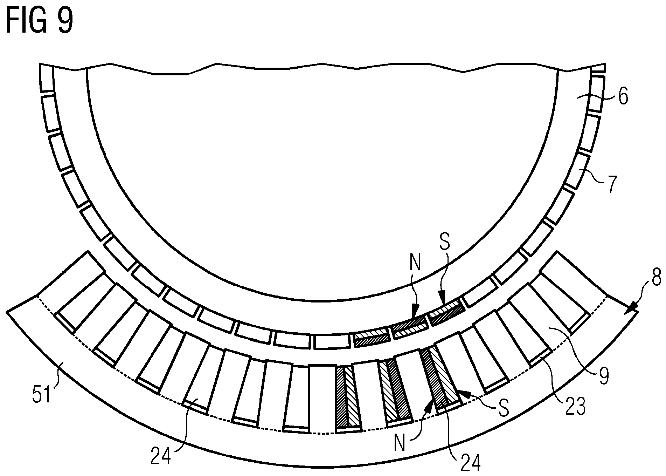

FIG 9 zeigt eine weitere Ausführung der Rastvorrichtung 8.

Die Rastvorrichtung 8 weist Permanentmagnete auf, welche in den Nuten 23 angeordnet sind. Ein Joch 51 dient in dieser Figur nur einer mechanischen Befestigung der Zähne und ist vorteilhaft nicht magnetisch leitend bzw. kaum magnetisch leitend. Das Joch 51 weist beispielsweise Kunststoff auf.

## Patentansprüche

1. Sortieranlage (10), insbesondere zum Transport und/oder zum Sortieren von Stückgütern (14), aufweisend:
- wenigstens eine Transportbahn (5), aufweisend wenigstens einen lokalen Stator (30),
- wenigstens eine Transporteinheit (1), aufweisend:
- wenigstens ein Förderelement (2), insbesondere zur Beladung und/oder Entladung eines Stückguts (14),
- wenigstens einen Förderrotor (6) mit wenigstens einem Permanentmagneten (7), vorzugsweise einer Mehrzahl an Permanentmagneten (7), zum Antrieb des Förderelements (2),
- wobei die Transporteinheit (1) zur Bewegung auf der Transportbahn (5) in einer Bewegungsrichtung (4) ausgebildet ist,
- wobei der Förderrotor (6) dazu ausgebildet ist, um eine Rotationsachse (R) zu rotieren, wenn der Förderrotor (6) in elektromagnetische Wechselwirkung mit dem lokalen Stator (30) gelangt,
**dadurch gekennzeichnet, dass** die Transportbahn (5) wenigstens eine Rastvorrichtung (8) aufweist, die derart ausgebildet ist, dass auf den Förderrotor (6) ein Rastmoment (20) wirkt, wenn der Förderrotor (6) in elektromagnetische Wechselwirkung mit der Rastvorrichtung (8) gelangt.

2. Sortieranlage (10) nach Anspruch 1, wobei die Rastvorrichtung (8) weichmagnetisches Material aufweist.

3. Sortieranlage (10) nach einem der vorhergehenden Ansprüche 1 oder 2, wobei die Rastvorrichtung (8) durch wenigstens einen Luftspalt (35) vom Förderrotor (6) beabstandet ist.

4. Sortieranlage (10) nach einem der vorhergehenden Ansprüche 1 bis 3, wobei die Rastvorrichtung (8) wenigstens einen Zahn (9) aufweist, wobei der Zahn (9) in Richtung des Luftspalts (35) weist.

5. Sortieranlage (10) nach einem der vorhergehenden Ansprüche 1 bis 4, wobei die Rastvorrichtung (8) eine Mehrzahl von Zähnen (9), vorzugsweise zwischen 10 und 15, aufweist, wobei die Rastvorrichtung (8) zwischen zwei Zähnen (9) eine Nut (23) aufweist.

6. Sortieranlage (10) nach einem der vorhergehenden Ansprüche 1 bis 5, wobei die Zähne (9) über ein magnetisch leitfähiges Joch (50) verbunden sind.

7. Sortieranlage (10) nach einem der vorhergehenden Ansprüche 1 bis 6, wobei die Rastvorrichtung (8) eine Mehrzahl von Materiallagen aufweist.

8. Sortieranlage (10) nach einem der vorhergehenden Ansprüche 1 bis 7, wobei ein Innendurchmesser der Rastvorrichtung (8) größer ist als ein Außendurchmesser des Förderrotors (6).

9. Sortieranlage (10) nach einem der vorhergehenden Ansprüche 1 bis 8, wobei die Rastvorrichtung (8) als Segment ausgebildet ist, wobei das Segment einen Winkel α abbildet, wobei der Winkel α vorzugsweise zwischen 90° und 150°, insbesondere zwischen 110° und 130°, liegt.

10. Sortieranlage (10) nach einem der vorhergehenden Ansprüche 1 bis 9, wobei eine Zahnteilung (τ_{z}) der Rastvorrichtung (8) wenigstens im Wesentlichen einer Polteilung (τₚ) der Permanentmagnete (7) des Förderrotors (6) entspricht.

11. Sortieranlage (10) nach einem der vorhergehenden Ansprüche 1 bis 10, wobei die Rastvorrichtung ein Wicklungssystem (21) zur Bildung und/oder Erhöhung eines Haltemoments aufweist, wobei das Wicklungssystem (21) vorzugsweise in den Nuten (23) positioniert ist.

12. Sortieranlage (10) nach einem der vorhergehenden Ansprüche 1 bis 11, wobei die Rastvorrichtung (8) Permanentmagnete (22, 24) zur Bildung und/oder Erhöhung des Haltemoments aufweist.

13. Sortieranlage (10) nach Anspruch 12, wobei die Permanentmagnete (22, 24) in den Nuten (23) angeordnet sind und/oder auf einer in Richtung des Luftspalts (35) weisenden Seite des Zahns (9) angeordnet sind.

14. Sortieranlage (10) nach einem der vorhergehenden Ansprüche 1 bis 13, wobei die Rastvorrichtung (8) an wenigstens einem Abschnitt der Transportbahn (5) angeordnet ist, der derart ausgebildet ist, dass eine Fliehkraft und/oder eine Schwerkraft eine Rotation des Förderrotors (6) ohne elektromagnetische Wechselwirkung mit einem Stator bewirken.

15. Sortieranlage (10) nach einem der vorhergehenden Ansprüche, aufweisend eine Mehrzahl an Transporteinheiten (1), wobei die Mehrzahl an Transporteinheiten (1) als, vorzugsweise gelenkig verbundene, Transportkette ausgebildet ist.

## Claims

1. Sorting installation (10), in particular for transporting and/or sorting items to be conveyed (14), having:
- at least one transport path (5), having at least one local stator (30),
- at least one transport unit (1), having:
- at least one conveyor element (2), in particular for loading and/or unloading items to be conveyed (14),
- at least one conveyor rotor (6) with at least one permanent magnet (7), preferably a plurality of permanent magnets (7), for driving the conveyor element (2),
- wherein the transport unit (1) is embodied to move on the transport path (5) in a movement direction (4),
- wherein the conveyor rotor (6) is embodied to rotate about an axis of rotation (R) when the conveyor rotor (6) interacts electromagnetically with the local stator (30),
**characterised in that** the transport path (5) has at least one latching apparatus (8), which is embodied such that a detent torque (20) acts on the conveyor rotor (6) when the conveyor rotor (6) interacts electromagnetically with the latching apparatus (8).

2. Sorting installation (10) according to claim 1, wherein the latching apparatus (8) has soft-magnetic material.

3. Sorting installation (10) according to one of the preceding claims 1 or 2, wherein the latching apparatus (8) is distanced from the conveyor rotor (6) by at least one air gap (35).

4. Sorting installation (10) according to one of the preceding claims 1 to 3, wherein the latching apparatus (8) has at least one tooth (9), wherein the tooth (9) points in the direction of the air gap (35).

5. Sorting installation (10) according to one of the preceding claims 1 to 4, wherein the latching apparatus (8) has a plurality of teeth (9), preferably between 10 and 15, wherein the latching apparatus (8) has a groove (23) between two teeth (9) .

6. Sorting installation (10) according to one of the preceding claims 1 to 5, wherein the teeth (9) are connected by way of a magnetically conductive yoke (50).

7. Sorting installation (10) according to one of the preceding claims 1 to 6, wherein the latching apparatus (8) has a plurality of material layers.

8. Sorting installation (10) according to one of the preceding claims 1 to 7, wherein an inside diameter of the latching apparatus (8) is greater than an outside diameter of the conveyor rotor (6).

9. Sorting installation (10) according to one of the preceding claims 1 to 8, wherein the latching apparatus (8) is embodied as a segment, wherein the segment describes an angle α, wherein the angle α lies preferably between 90° and 150°, in particular between 110° and 130°.

10. Sorting installation (10) according to one of the preceding claims 1 to 9, wherein a tooth pitch (τ_{z}) of the latching apparatus (8) corresponds at least substantially to a pole pitch (τ_{P}) of the permanent magnets (7) of the conveyor rotor (6).

11. Sorting installation (10) according to one of the preceding claims 1 to 10, wherein the latching apparatus has a winding system (21) in order to generate and/or increase a holding torque, wherein the winding system (21) is preferably positioned in the grooves (23).

12. Sorting installation (10) according to one of the preceding claims 1 to 11, wherein the latching apparatus (8) has permanent magnets (22, 24) in order to generate and/or increase the holding torque.

13. Sorting installation (10) according to claim 12, wherein the permanent magnets (22, 24) are arranged in the grooves (23) and/or on a side of the tooth (9) pointing in the direction of the air gap (35).

14. Sorting installation (10) according to one of the preceding claims 1 to 13, wherein the latching apparatus (8) is arranged on at least one section of the transport path (5), which is embodied such that a centrifugal force and/or gravity cause the conveyor rotor (6) to rotate without electromagnetic interaction with a stator.

15. Sorting installation (10) according to one of the preceding claims, having a plurality of transport units (1), wherein the plurality of transport units (1) is embodied as a transport chain, preferably connected in an articulated manner.

## Revendications

1. Installation (10) de tri, notamment pour le transport et/ou le tri de colis (14), comportant :
- au moins une voie (5) de transport, comportant au moins un stator (30) local,
- au moins une unité (1) de transport, comportant :
- au moins un élément (2) de manutention, notamment pour la charge et/ou la décharge d'un colis (14),
- au moins un rotor (6) de manutention, ayant au moins un aimant (7) permanent, de préférence une pluralité d'aimants (7) permanents, pour l'entraînement de l'élément (2) de manutention,
- dans laquelle l'unité (1) de transport est constituée pour le déplacement sur la voie (5) de transport dans un sens (4) de déplacement,
- dans laquelle le rotor (6) de manutention est constitué pour tourner autour d'un axe (R) de rotation, lorsque le rotor (6) de manutention arrive en interaction électromagnétique avec le stator (30) local,
**caractérisée en ce que** la voie (5) de transport a au moins un dispositif (8) d'encliquetage, qui est constitué de manière à ce qu'un couple (20) d'encliquetage s'applique au rotor (6) de manutention, lorsque le rotor (6) de manutention arrive en interaction électromagnétique avec le dispositif (8) d'encliquetage.

2. Installation (10) de tri suivant la revendication 1, dans laquelle le dispositif (8) d'encliquetage a du matériau à magnétisme doux.

3. Installation (10) de tri suivant l'une des revendications 1 ou 2 précédentes, dans laquelle le dispositif (8) d'encliquetage est à distance du rotor (6) de manutention par au moins un entrefer (35) .

4. Installation (10) de tri suivant l'une des revendications 1 à 3 précédentes, dans laquelle le dispositif (8) d'encliquetage a au moins une dent (9), la dent (9) étant tournée en direction de l'entrefer (35).

5. Installation (10) de tri suivant l'une des revendications 1 à 4 précédentes, dans laquelle le dispositif (8) d'encliquetage a une pluralité de dents (9), de préférence entre 10 et 15, le dispositif (8) d'encliquetage ayant une encoche (23) entre deux dents (9).

6. Installation (10) de tri suivant l'une des revendications 1 à 5 précédentes, dans laquelle les dents (9) sont reliées par une culasse (50) conductrice magnétiquement.

7. Installation (10) de tri suivant l'une des revendications 1 à 6 précédentes, dans laquelle le dispositif (8) d'encliquetage a une pluralité de couches de matériau.

8. Installation (10) de tri suivant l'une des revendications 1 à 7 précédentes, dans laquelle un diamètre intérieur du dispositif (8) d'encliquetage est plus grand qu'un diamètre extérieur du rotor (6) de manutention.

9. Installation (10) de tri suivant l'une des revendications 1 à 8 précédentes, dans laquelle le dispositif (8) d'encliquetage est constitué sous la forme d'un segment, le segment représentant un angle a, l'angle α étant de préférence compris entre 90° et 150°, notamment entre 110° et 130°.

10. Installation (10) de tri suivant l'une des revendications 1 à 9 précédentes, dans laquelle un pas (τ_{Z}) de dent du dispositif (8) d'encliquetage correspond au moins sensiblement à un pas (τ_{P}) polaire des aimants (7) permanents du rotor (6) de manutention.

11. Installation (10) de tri suivant l'une des revendications 1 à 10 précédentes, dans laquelle le dispositif d'encliquetage a un système (21) d'enroulement pour la formation et/ou l'augmentation d'un couple de retenue, dans lequel le système (21) d'enroulement est mis en position, de préférence dans les encoches (23).

12. Installation (10) de tri suivant l'une des revendications 1 à 11 précédentes, dans laquelle le dispositif (8) d'encliquetage a des aimants (22, 24) permanents de formation et/ou d'augmentation du couple de retenue.

13. Installation (10) de tri suivant la revendication 12, dans laquelle les aimants (22, 24) permanents sont disposés dans les encoches (23) et/ou sont disposés d'un côté de la dent (9) tourné dans la direction de l'entrefer (35).

14. Installation (10) de tri suivant l'une des revendications 1 à 13 précédentes, dans laquelle le dispositif (8) d'encliquetage est disposé sur au moins un tronçon de la voie (5) de transport, qui est constitué de manière à ce qu'une force centrifuge et/ou une force de gravité provoquent, sans interaction électromagnétique avec un stator, une rotation du rotor (6) de manutention.

15. Installation (10) de tri suivant l'une des revendications précédentes, comportant une pluralité d'unités (1) de transport, dans laquelle la pluralité d'unités (1) de transport est constituée sous la forme d'une chaîne de transport, de préférence articulée.
